# EUROPÄISCHE PATENTSCHRIFT

(11) **EP 0 729 312 B1**
(45) Veröffentlichungstag und Bekanntmachung des Hinweises auf die Patenterteilung: **14.01.1998**
(21) Anmeldenummer: 94930164.2
(22) Anmeldetag: 12.10.1994
(51) Int. Cl.: A47J 27/18

(54) **VORRICHTUNG ZUM DISKONTINUIERLICHEN ZUBEREITEN VON PORTIONIERTEN TEIGWAREN**
DEVICE FOR THE DISCONTINUOUS PREPARATION OF PORTIONED PASTA
DISPOSITIF POUR PREPARER EN DISCONTINU DES PATES ALIMENTAIRES EN PORTIONS

(30) Priorität: 20.11.1993 DE 4339594
(43) Veröffentlichungstag der Anmeldung: 04.09.1996
(73) Patentinhaber: ALITECNICA S.A., 6932 Breganzona (CH)
(72) Erfinder: STEIN, Hans-Ulrich, Dr., 86916 Kaufering (DE)
(74) Vertreter: MEISSNER, BOLTE & PARTNER
(86) Internationale Anmeldenummer: EP9403366
(87) Internationale Veröffentlichungsnummer: WO9514415

(56) Entgegenhaltungen:
- EP-A- 0 068 060
- EP-A- 0 296 549
- WO-A-87/00741
- WO-A-92/18040
- AU-B- 494 966
- CH-A- 440 872
- NL-A- 7 408 827
- US-A- 4 347 833

## Beschreibung

Die Erfindung betrifft eine Vorrichtung zum diskontinuierlichen Zubereiten von portionierten Teigwaren, insbesondere Spaghetti, mit einem Vorratsbehälter zur Aufnahme der Rohteigwaren, einer Kochkammer und einer Entwässerungskammer, wobei die Kochkammer und die Entwässerungskammer jeweils in ihrem Einlaßbereich und Auslaßbereich durch Ventile verschließbar sind, wobei als Ventil im Auslaßbereich der Entwässerungskammer eine quer zur Einlaß- bzw. Auslaßrichtung linear verfahrbare Schließklappe vorgesehen ist und wobei im Auslaßbereich der Kochkammer und im Einlaßbereich der Entwässerungskammer ein einziges Ventil vorgesehen ist.

Eine derartige Vorrichtung ist aus der EP-A-296 549 bekannt, die eine Kochkammer und eine Entwässerungskammer aufweist. Diese beiden Kammern weisen Einlaß- und Auslaßventile auf, wobei ein einziges Ventil als Auslaßventil der Kochkammer und als Einlaßventil der Entwässerungskammer dient.

Vorrichtungen zum diskontinuierlichen Zubereiten von portionierten Teigwaren sind in vielerlei Ausführungen bekannt. Sie dienen dazu, eine portionierte Menge roher Teigwaren in möglichst kurzer Zeit zuzubereiten und finden daher in entsprechenden Automaten Anwendung. Eine solche bekannte Vorrichtung ist in der WO 90/04345 beschrieben. Dort werden oberhalb einer Kochkammer befindliche Rohteigwaren portioniert in die Kochkammer gegeben, die Kochkammer wird verschlossen, und die Teigwaren werden unter vorbestimmter Temperatur und entsprechendem Druck in relativ kurzer Zeitspanne gekocht. Anschließend verlassen die gekochten Teigwaren mit dem Kochwasser die Kochkammer und werden in einer sich anschließenden Entwässerungskammer vom Wasser befreit. Schließlich erfolgt die Ausgabe in ein geeignetes Behältnis, wie beispielsweise einen Teller.

Die Kochkammer wird in ihrem Einlaß- und Auslaßbereich von jeweils einem Kugelventil verschlossen, welches einerseits ein Befüllen und Entleeren der Kochkammer gewährleistet und andererseits - während des Kochvorganges - eine sichere Abdichtung der Kochkammer garantiert. Aufgrund der relativ hohen Reibung von Kugelventilen sind diese jedoch äußerst schwergängig und ihr Antrieb bedarf daher einer gewissen Kraft, so daß in der Regel pneumatische Antriebe zum Einsatz kommen. Kugelventile haben jedoch den weiteren Nachteil, daß sie eine relativ große Bauhöhe besitzen und daher die Gesamthöhe der eingangs genannten Vorrichtung vergrößern. Schließlich ist die Verwendung eines Kugelventils im Auslaßbereich der Kochkammer nicht optimal, da die - gekochten und damit empfindlichen - Teigwaren beim Passieren des Kugelventils beschädigt werden können.

Die CH-A-440 872 betrifft eine Schließvorrichtung, insbesondere für Autoklaven. Zum Verschließen eines Behälters wird dort ein Schiebedeckel mit einem geeigneten Mechanismus in Querrichtung in einer Ebene vor der Öffnung eines Behälters verschoben. Wenn der Deckel seine Endposition vor dieser Öffnung erreicht hat, werden mit einer geeigneten Mechanik Exzenterstücke zugestellt, die dann den Deckel entgegen der Wirkung von federnden Führungen gegen randseitig vorgesehene Dichtungen zum Verschließen des Behälters pressen. Bei einer Vorrichtung zum diskontinuierlichen Zubereiten von portionierten Teigwaren auftretende Probleme sind dort nicht angesprochen.

Aus der WO-A-87-00741 ist eine Maschine zum raschen Kochen von Spaghettiportionen bekannt. Dort werden die Teigwaren zunächst einmal in einer ersten Kochkammer vorgekocht. Anschließend werden diese vorgekochten Teigwaren durch Erzeugung eines entsprechenden plötzlichen Druckabfalles mit dem restlichen Wasser in eine zweite Kochkammer überführt, in welcher dann ein weiterer Kochvorgang bei Atmosphärendruck stattfindet.

Der Erfindung liegt die Aufgabe zugrunde, bei einer Vorrichtung der eingangs genannten Art die vorgenannten Ventile so auszugestalten, daß sie bei ihrer Betätigung die Teigwaren nicht beschädigen, daß sie zuverlässig arbeiten und daß sie wenig Raum in Anspruch nehmen.

Die erfindungsgemäße Lösung besteht darin, eine Vorrichtung der eingangs genannten Art so auszubilden, daß die Ventile im Einlaßbereich der Kochkammer und im Auslaßbereich der Entwässerungskammer als Schließklappen mit Abstand zur jeweiligen, die Öffnung der Kammer enthaltenden Kammerwand linear bewegbar sind, daß die Schließklappen zum Verschließen am Ende der Linearbewegung mittels eines Hebelgetriebes senkrecht auf die Öffnungsebene der jeweiligen Kammer gepreßt werden und daß das Ventil zwischen dem Auslaßbereich der Kochkammer und dem Einlaßbereich der Entwässerungskammer als schwenkbare Schließklappe ausgebildet ist, die mittels eines Linearantriebes und eines Kniehebelgetriebes verschlossen und verriegelt wird.

Bei der erfindungsgemäßen Vorrichtung erfolgt die Pressung mittels eines Hebelgetriebes, so daß die Antriebsleistung sowohl für die Linearbewegung als auch für die Hebelbewegung äußerst gering dimensioniert werden kann. Damit ergibt sich eine sehr günstige Bauhöhe der Ventile der erfindungsgemäßen Vorrichtung, so daß die Gesamthöhe der Vorrichtung so gering ausfällt, daß eine bequeme Handhabbarkeit der mit den erfindungsgemäßen Vorrichtungen ausgerüsteten Automaten ermöglicht wird. Dabei ist es möglich, eine Bauhöhe zu erreichen, die einen Meter Höhe kaum übersteigt.

Die Verwendung eines Kniehebelgetriebes ist besonders wichtig, da ein relativ schwach dimensionierter Antriebsmotor eingesetzt werden soll und die in der Kochkammer beim Kochvorgang auftretenden hohen Drücke von einigen Bar aufgrund der Kniehebelkonstruktion nicht auf den Motor wirken.

Es hat sich gezeigt, daß die mit den beschriebenen Schließklappen verschlossenen Kochkammern Drücken bis 50 bar standhalten, auch wenn im späteren Betrieb solch hohe Drücke keinesfalls auftreten.

In weiterer Ausgestaltung der Erfindung ist zur Bewegung der Schließklappen in beide Richtungen, also in horizontaler Linearverschiebung und in senkrechter Preßrichtung, nur ein einziger Motor vorgesehen. Dazu hat es sich nach einer weiteren Lehre der Erfindung als besonders vorteilhaft erwiesen, daß eine Rutschkupplung vorgesehen ist, damit beim Verschließen nach Erreichen der Endstellung der Schließklappe die weitere Linearbewegung zur Betätigung des Hebelgetriebes eingesetzt wird, mit anderen Worten die Schließklappe selbst in ihrer Position verharrt, jedoch die Antriebsmittel für das Hebelgetriebe durch die weitere Linearbewegung des Antriebes erfolgt. Auf diese Weise kann mit geringem konstruktivem Aufwand ein schnelles und sicheres Verschließen gewährleistet werden.

In Weiterbildung der erfindungsgemäßen Vorrichtung ist vorgesehen, daß als Linearantrieb für die schwenkbare Schließklappe eine Kolben/Zylinder-Einheit vorgesehen ist.

Bei einer speziellen Bauform der erfindungsgemäßen Vorrichtung ist vorgesehen, daß das Kniehebelgetriebe für die schwenkbare Schließklappe einen in einem Lager innerhalb der Entwässerungskammer schwenkbar befestigten Kniehebel und eine an dem dem Lager abgewandten Ende des Kniehebels angeordnete Klemmrolle aufweist, wobei die Klemmrolle die drehbare Schließklappe in ihre Verschlußposition bringt und der beim Kochvorgang entstehende und auf die drehbare Schließklappe wirkende Druck durch das Lager abgefangen wird.

In Weiterbildung dieser Ausführungsform ist vorgesehen, daß die drehbare Schließklappe einen Schließkeil zum Zusammenwirken mit der Klemmrolle aufweist.

In Weiterbildung der erfindungsgemäßen Vorrichtung ist vorgesehen, daß die drehbare Schließklappe mit einer Schulter ausgestaltet ist, welche bei der Rückziehbewegung des Kolbens des Linearantriebes in Verbindung mit dem Kniehebelgetriebe dafür sorgt, daß die drehbare Schließklappe zuverlässig zwangsgeöffnet wird.

In Weiterbildung der erfindungsgemäßen Vorrichtung ist vorgesehen, daß zu beiden Seiten des Kolbens des Linearantriebes Abdeckungen derart angeordnet sind, daß der gesamte Kniehebel mit seiner Klemmrolle und einer Kulissenführung im Inneren der Abdeckung liegen und von der Unterseite der drehbaren Schließklappe verdeckt sind.

Zur besseren Abdichtung sind bei der erfindungsgemäßen Vorrichtung sämtliche Schließklappen und/oder Öffnungsebenen der Kammern mit Dichtelementen versehen. Zweckmäßigerweise ist dazu jeder Öffnungsbereich der Kammern von einem entsprechend der Öffnungskontur verlaufenden Dichtelement umgeben. Besonders vorteilhaft ist es, wenn die Öffnungen in den Öffnungsbereichen einen runden Querschnitt aufweisen und als Dichtelemente O-Ringe vorgesehen sind. Die so eingesetzten O-Ringe haben eine relativ lange Lebensdauer, da die Schließklappen sämtlich nahezu senkrecht auf die Öffnungen aufgebracht werden und daher ein Abscheren, Einklemmen oder Verrutschen nicht eintreten kann. Des weiteren lassen sich O-Ringe bei geöffneten Schließklappen leicht austauschen.

In Weiterbildung der erfindungsgemäßen Vorrichtung ist vorgesehen, daß die Teigwaren in wenigstens einem trichterförmigen Behälter horizontal gelagert sind, daß am Boden jedes trichterförmigen Behälters eine höhenverstellbare Dosierplatte angeordnet ist, daß zum Portionieren mit einer oberhalb jeder Dosierplatte angeordneten Trennplatte eine gewünschte Menge vom Teigwarenvorrat abgesondert wird und daß im Bereich unterhalb jeder Dosierplatte eine zur Beschickung der Kochkammer um 90° schwenkbare Übergabeschale angeordnet ist. Auf diese Weise wird eine äußerst geringe Bauhöhe erzielt, denn die horizontal gelagerten rohen Teigwaren werden mittels der Übergabeschale aus der horizontalen Lage in die senkrechte Position gebracht, um dann die Kochkammer zu beschicken.

In Weiterbildung dieser Ausführungsform ist vorgesehen, daß zwei Vorratsbehälter vorgesehen sind und zwei parallele Wände jedes Vorratsbehälters im Abstand voneinander derart angeordnet sind, daß ein Freiraum zum Verschwenken der Übergabeschale entsteht. Damit wird auch bei langen Teigwaren, wie zum Beispiel Spaghetti, sichergestellt, daß der Boden des Vorratsbehälters bzw. der Vorratsbehälter nur wenig oberhalb der Öffnung der Kochkammer angeordnet sein kann.

Da beim Betrieb der erfindungsgemäßen Vorrichtung die in der Kochkammer herrschende Wärme nicht vollständig abgeführt werden kann, kann es vorkommen, daß die normalerweise relativ starren rohen Teigwaren eine etwas weichere Konsistenz bekommen. Um dennoch ein bestimmtes Mengenvolumen der rohen Teigwaren ohne deren Zerstörung oder Beschädigung abtrennen zu können, ist in Weiterbildung der erfindungsgemäßen Vorrichtung vorgesehen, daß jede Trennplatte eine ballige Form aufweist und daß die ballige Kante der in jeden Vorratsbehälter eingeschobenen Trennplatte oberhalb eines Vorsprunges ruht, ohne die Behälterwandung zu berühren.

Auf diese Weise kann ein Zerquetschen oder Abbrechen durch die mechanische Einwirkung der Trennplatte zuverlässig vermieden werden. Es hat sich gezeigt, daß es nicht nötig ist, daß die Trennplatte die gegenüberliegende Wandung oder aber den Vorsprung an dieser Wandung berührt, vielmehr ist es besonders zweckmäßig, daß der Abstand zwischen der in den Vorratsbehälter eingeschobenen Trennplatte und dem Vorsprung in etwa dem Durchmesser der verwendeten Teigwaren entspricht. Ein Nachrutschen weiterer Teigwaren wird nämlich zuverlässig dadurch vermieden, daß die auf dem Vorsprung ruhenden Teigwaren den zwischen Vorsprung und Trennplatte existierenden Spalt zuverlässig "verstopfen".

Die Erfindung wird nachfolgend anhand von bevorzugten Ausführungsbeispielen und unter Bezugnahme auf die beiliegenden Zeichnungen näher erläutert.

In den Zeichnungen zeigen:
- Fig. 1: die Funktionsweise der erfindungsgemäßen Vorrichtung in schematischer Darstellung,
- Fig. 2: ein Verschließventil der erfindungsgemäßen Vorrichtung in perspektivischer Darstellung,
- Fig. 3: die Verschlußvorrichtung aus Fig. 2 in schematischer Darstellung,
- Fig. 4: das Verschlußventil zwischen Kochkammer und Entwässerungskammer in schematischer Darstellung,
- Fig. 5: die Schließklappe und das Kniehebelgetriebe aus Fig. 4 in detaillierter Darstellung,
- Fig. 6: eine Portioniervorrichtung der erfindungsgemäßen Vorrichtung im Querschnitt entlang der Linie VI-VI aus Fig. 7 und
- Fig. 7: eine Aufsicht auf die Portioniervorrichtung gemäß Fig. 6 in schematischer Darstellung.

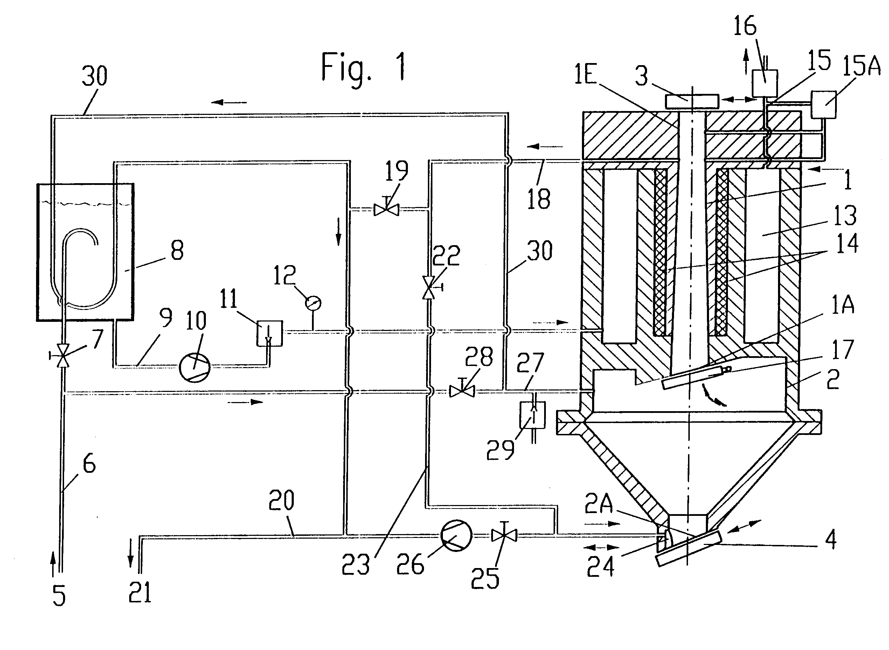

Mit Hilfe von Figur 1 soll die erfindungsgemäße Vorrichtung näher erläutert werden. Die Vorrichtung besteht im wesentlichen aus einer Kochkammer 1 mit einem Kochkammereinlaß 1E und einem Kochkammerauslaß 1A. Nicht dargestellt ist, daß oberhalb der Kochkammer 1 eine Portioniervorrichtung zum Beschicken der Kochkammer 1 vorgesehen ist. Unterhalb der Kochkammer l befindet sich eine Entwässerungskammer 2, deren Einlaß mit dem Kochkammerauslaß 1A identisch ist. Am Boden der Entwässerungskammer 2 befindet sich ein Entwässerungskammerauslaß 2A. Erfindungsgemäß ist nun die Kochkammer 1 in ihrem Einlaßbereich 1E durch eine linear verfahrbare Schließklappe 3 und der Auslaßbereich 2A der Entwässerungskammer 2 durch eine linear verfahrbare Schließklappe 4 verschließbar.

Der eigentliche Zubereitungsvorgang gestaltet sich wie folgt:

Nachdem die vorgegebene Menge von Teigwaren in die in ihrem Auslaßbereich 1A verschlossene Kochkammer 1 eingefüllt worden ist, wird die in ihrem unteren Bereich bereits verschlossene Kochkammer 1 mit Hilfe der linear verfahrbaren Schließklappe 3 verschlossen. Von einer Frischwasserzufuhr 5 wird über eine Leitung 6 und ein geöffnetes Absperrventil 7 Frischwasser in einen Vorratsbehälter 8 eingelassen. Von dort gelangt das Wasser über eine Leitung 9 mittels einer Pumpe 10 durch ein Rückschlagventil 11 mit einem über ein Manometer 12 ablesbaren vorgegebenen Druck in die Heizkammer 13, welche die Kochkammer 1 ringspaltartig umgibt. In der Zwischenwandung zwischen Kochkammer 1 und Heizkammer 13 sind Heizstäbe 14 angeordnet.

Bevor der eigentliche Heizvorgang beginnt, wird die gesamte Heizkammer 13 mit Wasser gefüllt und darüber hinaus eine vorgegebene Menge Wasser über eine Fülleitung 15, welche mit einem Überdruckventil 16 ausgestattet ist in die Kochkammer 1 eingefüllt. Nachdem nun der gewünschte Füllstand innerhalb der Kochkammer 1 erreicht ist, wird ein Absperrventil 15A in der Fülleitung 15 verschlossen, so daß die Kochkammer 1 hermetisch verschlossen ist. In ihrem Auslaßbereich 1A dient dazu eine weiter unten noch näher erläuterte Schließklappe 17.

Der nach dem eigentlichen Kochvorgang in der Kochkammer 1 herrschende Überdruck wird mittels einer Druckentlastungsleitung 18, die einerseits über ein Absperrventil 19 mit einer Abwasserleitung 20, welche in einer Abwasserabfuhr 21 endet, und andererseits über ein Absperrventil 22 und eine Leitung 23 mit der Entwässerungskammer 2 verbunden ist, durch Öffnen des Absperrventils 22 abgebaut. Nunmehr befinden sich Kochkammer 1 und Entwässerungskammer 2 auf etwa gleichem Druckniveau. Nach dem Schließen des Absperrventils 22 kann die Schließklappe 17 geöffnet werden, und die gekochten Teigwaren fallen mit dem restlichen Kochwasser in die Entwässerungskammer 2.

Ein im Bodenbereich der Entwässerungskammer 2 vorgesehenes Sieb 24 bildet den Durchlaß zur Leitung 23. Nach Schließen des Absperrventils 22 und Öffnen des Absperrventils 25 sorgt eine Abwasserpumpe 26 für die Entwässerung der in der Entwässerungskammer 2 vorhandenen Teigwaren. Dabei sorgt das Sieb 24 dafür, daß die Teigwaren die Entwässerungskammer 2 nicht verlassen. Gleichzeitig wird der in der Entwässerungskammer noch vorhandene Überdruck abgebaut. Dazu dient eine Leitung 27, welche mittels eines Absperrventils 28 mit der Frischwasserleitung 6 verbunden ist und in der Nähe ihrer Einmündung in die Entwässerungskammer 2 ein Belüftungsventil 29 aufweist. Aus der Entwässerungskammer 2 gelangt heißer Dampf durch eine Vorwärmleitung 30 in den Vorratsbehälter 8 und wärmt dort das später durch die Heizstäbe 14 aufzuheizende Frischwasser zusätzlich auf. Die Vorwärmleitung 30 endet in der Wasserleitung 20 und somit in der Abwasserabfuhr 21.

Nachdem die Teigwaren vom Kochwasser getrennt worden sind, läßt sich die fertig zubereitete Portion Teigwaren mittels der linear verschiebbaren Schließklappe 4 auf einen unterhalb der Entwässerungskammer 2 befindlichen Teller oder dergleichen ausgeben.

Nur schematisch ist dargestellt, daß der Querschnitt der Kochkammer 1 nach unten konisch auseinanderläuft. Auf diese Weise wird in diesem Bereich zuverlässig ein Hängenbleiben gekochter Teigwaren verhindert. Es versteht sich von selbst, daß die Kammern 1 und 2 eine glatte, nicht haftende Oberfläche haben oder mit einer geeigneten Antihaft-Beschichtung versehen sind. Zur Reinigung der Entwässerungskammer 2 wird nach der Ausgabe der Teigwaren und dem erneuten Verschließen der Schließklappe 4 Frischwasser über die Leitung 6 durch Öffnen des Absperrventils 28 in die Entwässerungskammer 2 geleitet. Nach dem Füllen der Entwässerungskammer 2 und Verschließen des Absperrventils 28 wird das Absperrventil 25 geöffnet und die Pumpe 26 aktiviert, so daß das Abwasser durch das Sieb 24 über die Abwasserleitung 20 zur Abwasserabfuhr 21 gelangt, bis die Entwässerungskammer 2 vollständig entleert ist.

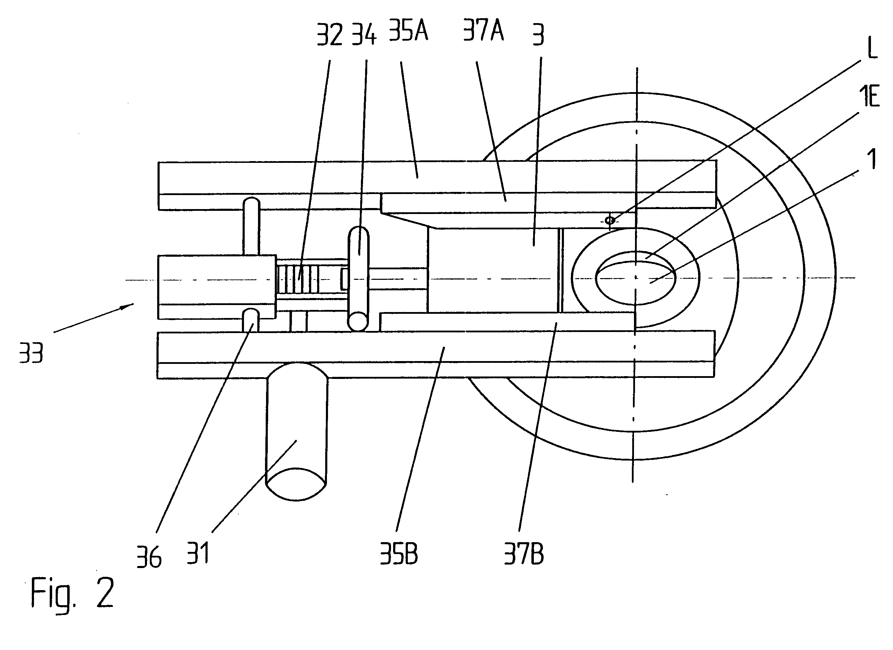

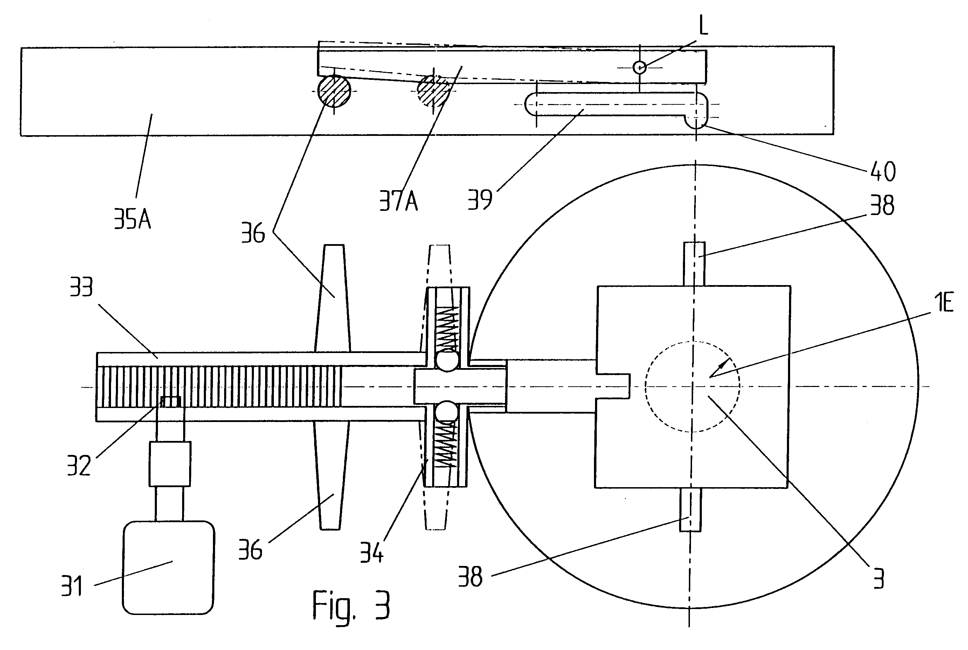

Da im dargestellten und insoweit bevorzugten Ausführungsbeispiel die Schließklappen 3 und 4 nahezu identisch aufgebaut sind, soll anhand der Figuren 2 und 3 die Funktionsweise lediglich am Beispiel der Schließklappe 3 erläutert werden. Nach einer zweckmäßigen Ausgestaltung der Erfindung ist beim bevorzugten Ausführungsbeispiel zur Bewegung der Schließklappe 3 in beide Richtungen ein einziger Motor 31 vorgesehen. Dieser treibt über ein Ritzel 32 und eine nicht näher bezeichnete Zahnstange einen Schlitten 33 linear an.

Damit wird die Schließklappe 3 über den in Figur 2 geöffnet dargestellten Kochkammereinlaß 1E bewegt.

Nach Erreichen der Endposition bewirkt eine im Schlitten 33 vorgesehene Rutschkupplung 34, daß die weitere Linearbewegung des Motors 31 zur Betätigung eines Hebelgetriebes ausgenutzt wird. Dazu sind in zwei zur Führung des Schlittens 33 dienenden Schienen 35A und 35B, welche in geeigneter Weise starr miteinander verbunden sind, Mittel zur Führung und zum Verschließen vorgesehen. Am Schlitten 33 in Richtung der Schienen 35A und 35B weisende Verriegelungsbolzen 36 werden unter die Keilflächen von an jeder Schiene 35A und 35B angeordneten Keilhebeln 37A und 37B gebracht.

Nach Beendigung der Linearbewegung der Schließklappe 3 wird nun die Rutschkupplung 34 aktiviert, so daß die Verriegelungsbolzen 36 unter die Keilflächen der in einem Lagerungspunkt L oberhalb des Kochkammereinlasses 1E schwenkbar gelagerten Keilhebel 37A und 37B gepreßt werden. Auf diese Weise kann mit einer äußerst geringen Antriebsleistung ein sicheres Verschließen und festes Verspannen der Schließklappe 3 mit der Kochkammer 1 erfolgen.

In Figur 3 ist nun noch einmal der Verschließvorgang schematisch dargestellt. Zur besseren Übersicht ist lediglich eine Schiene 35A in Seitenansicht oberhalb der Aufsicht des Schlittens 33 dargestellt. Es wird deutlich, daß die Schließklappe 3 mittels Führungsstiften 38 in in den Schienen 35A und 35B vorgesehenen Langlöchern 39 geführt bewegt werden können. Die Schließklappe 3 ist in Figur 3 in ihrer Schließstellung dargestellt. Dort befindet sich der Führungsstift 38 am Anschlag des Langloches 39, welches jedoch zur Kochkammer 1 hin eine wiederum langlochartige Ausnehmung 40 aufweist.

Die Funktionsweise der Rutschkupplung 34 ist mittels nicht näher bezeichneten von Schraubenfedern in Ausnehmungen eines Bolzens gepreßten Kugeln angedeutet. Es ist klar, daß auch andere bekannte Arten von Rutschkupplungen verwendet werden können. Nachdem nun die Schließklappe 3 ihre Endstellung erreicht hat, die Bewegung des Schlittens 33 über den Motor 31 jedoch noch nicht endet, wird die Federkraft der Schraubfedern überwunden, so daß der Schlitten 33 mit den Verriegelungsbolzen 36 solange weiterbewegt wird, bis die Verriegelungsbolzen 36 in die strichpunktiert eingezeichnete Lage geraten.

Dadurch werden die Keilhebel 37A und 37B um den Lagerungspunkt L verschwenkt, so daß eine große Kraft auf die Schließklappe 3 wirkt, welche mittels ihrer Führungsstifte 38 nunmehr in die Ausnehmung 40 bewegt werden. Diese Art des Verschlusses ist besonders zweckmäßig, da um die Einlaßöffnung angeordnete (nicht dargestellte) Dichtelemente niemals abgeschert oder ungleichmäßig belastet werden können. Vielmehr bewegt sich die Schließklappe 3 zunächst mit Abstand über die Öffnung der entsprechenden Kammer, so daß die Dichtelemente erst bei der dazu senkrechten Schließbewegung gleichmäßig belastet werden.

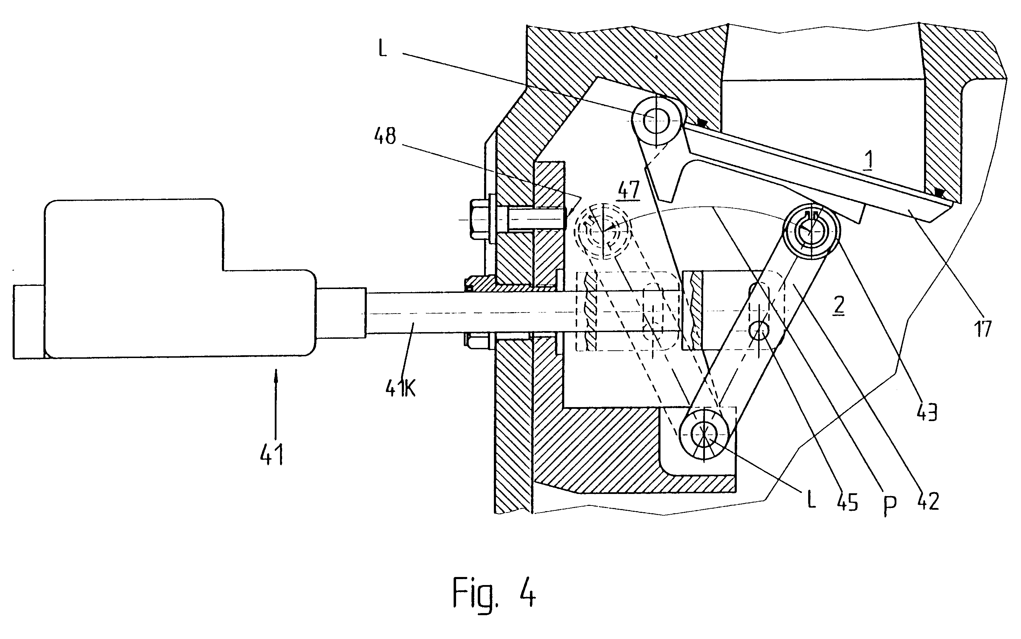

Figur 4 zeigt schematisch, daß im Auslaßbereich 1A der Kochkammer 1 und im Einlaßbereich der Entwässerungskammer 2 das Verschließen mittels der Schließklappe 17 und einem Kniehebelgetriebe erfolgt, welches nachfolgend näher beschrieben wird. zum Verriegeln der Schließklappe 17 dient ein Linearantrieb, welcher lediglich schematisch durch eine Kolben/Zylinder-Einheit dargestellt ist. Ein in einem Lager L innerhalb der Entwässerungskammer 2 schwenkbar befestigter Kniehebel 42 weist an seinem dem Lager L abgewandten Ende eine Klemmrolle 43 auf. Die Verbindung von Kolben 41K und Kniehebel 42 erfolgt mittels eines in einer Kulisse 44 gelagerten Kulissensteins 45. Durch Betätigung des Kolbens wird der Kniehebel in die gestrichelte Position gebracht, wobei die Klemmrolle 43 die Schließklappe 17 in die Verschlußposition bringt und der beim Kochvorgang entstehende und auf die Schließklappe 17 wirkende Druck durch das Lager L abgefangen wird, ohne daß der Antrieb Schaden nimmt.

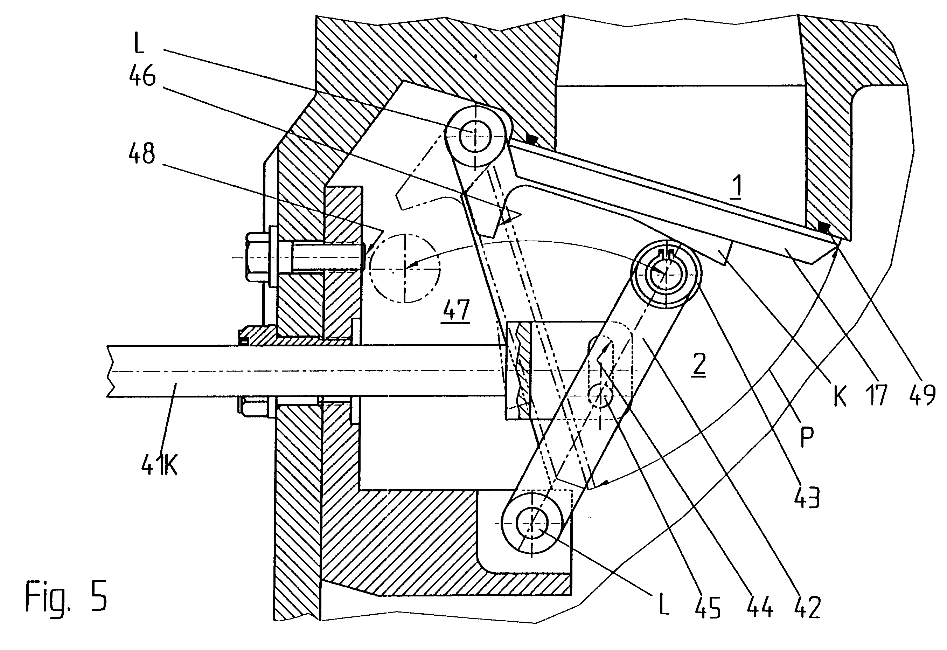

In Figur 5 ist nun der zuvor beschriebene Kniehebelmechanismus zum Verschließen der Schließklappe 17 detailliert dargestellt. Es ist erkennbar, daß die Schließklappe 17 nicht nur einen Schließkeil K zum Zusammenwirken mit der Klemmrolle 43 aufweist, sondern zu ihrer Lagerung L hin mit einer Schulter 46 ausgestattet ist, welche bei der Rückziehbewegung des Kolbens 41K in Verbindung mit der Klemmrolle 43 dafür sorgt, daß die Schließklappe 17 zuverlässig zwangsgeöffnet wird. Die Bewegung von Schließklappe 17, Kniehebel 42 und Klemmrolle 43 ist dabei durch Pfeile angedeutet, bis die Schließklappe 17 in der gestrichelten Position verharrt.

Zu beiden Seiten des Kolbens 41K angeordnete Abdeckungen 47 (von denen nur die hintere dargestellt ist) sorgen dafür, daß der gesamte Kniehebel 42 mit Klemmrolle 43 und Kulissenführung 44, 45 im Inneren der Abdeckungen 47 liegen und von der Unterseite der Schließklappe 17 verdeckt sind, so daß eine Berührung mit den Teigwaren zuverlässig ausgeschlossen ist. Ferner ist dargestellt, daß die Klemmrolle 43 an einem Anschlag 48, welcher im dargestellten und insoweit bevorzugten Ausführungsbeispiel durch eine nicht näher bezeichnete Schraube gebildet wird, mit der die Öffnungsstellung der Schließklappe 17 einstellbar fixiert wird, um wiederum den Kolben 41K nicht zu belasten.

Es wurde bereits erwähnt, daß zum Erreichen einer optimalen Abdichtung entsprechende Dichtelemente und zur vorteilhaften Ausgestaltung O-Ringe 49 verwendet werden, welche in entsprechenden Nuten in den verschiedenen Kammeröffnungsbereichen einsitzen. Aus Figur 5 geht deutlich hervor, daß die O-Ringe 49 - wie bei den Schließklappen 3 und 4 - nur senkrecht zur O-Ring-Ebene belastet werden. Dies führt einerseits zu einer langen Lebensdauer der O-Ringe und ermöglicht andererseits ein leichtes Austauschen bei geöffneten Schließklappen 3, 4 und 17.

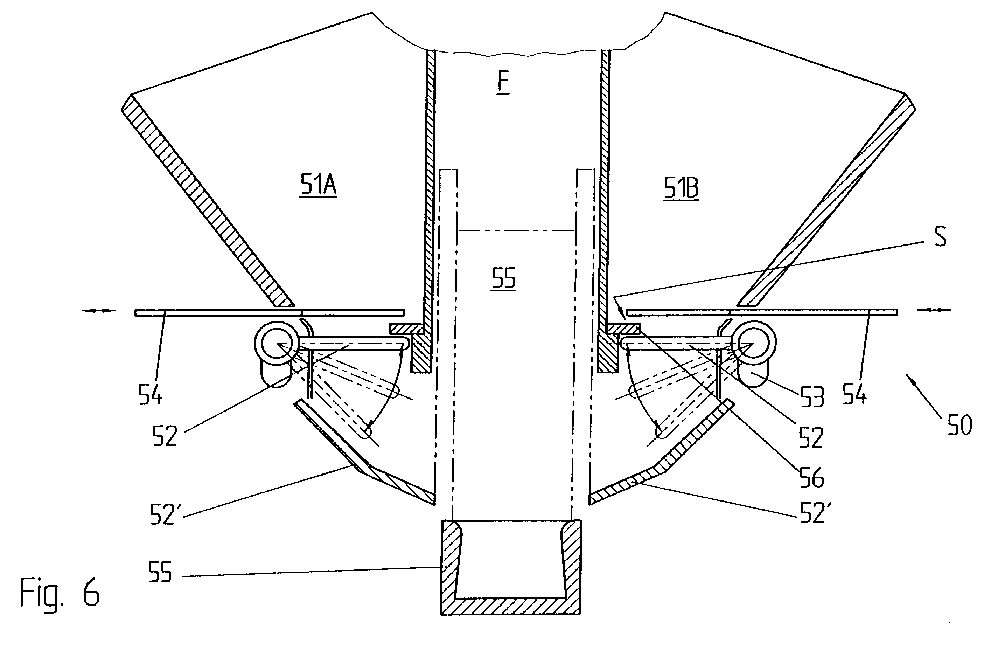

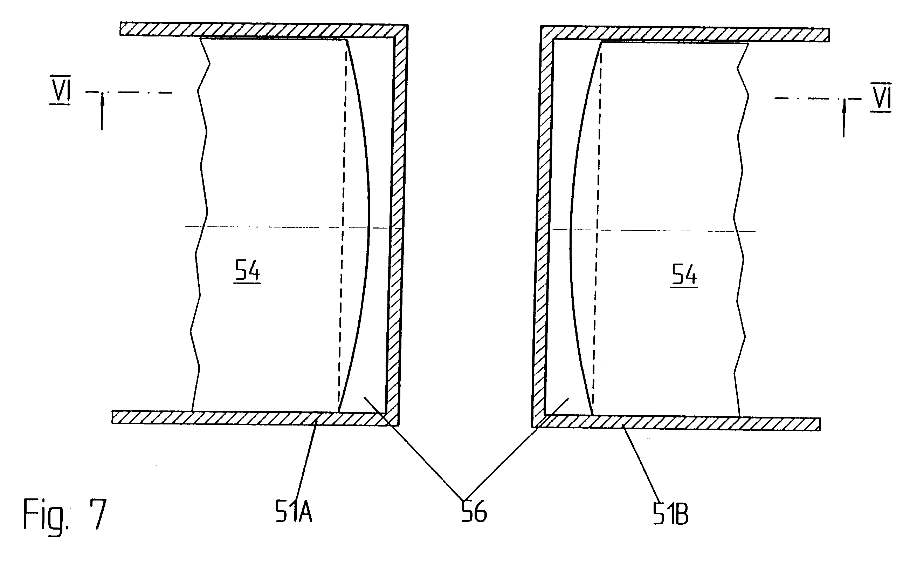

Die Figuren 6 und 7 zeigen schließlich eine erfindungsgemäße Portioniervorrichtung 50 zum Portionieren einer vorgebbaren Menge langstieliger Teigwaren und Zuführen in die Kochkammer 1. Die Portioniervorrichtung 50 ist dabei in Figur 6 im Querschnitt dargestellt. Sie besteht im wesentlichen aus zwei trichterförmigen Behältern 51A und 51B, welche in ihrem Bodenbereich eine höhenverstellbare Dosierplatte 52 aufweisen, wobei die Höhenverstellbarkeit beispielsweise in einem Langloch 53 erfolgen kann. Die Pfeile und gestrichelten Darstellungen der Dosierplatten 52 erläutern deren Funktionsweise.

Die in den Behältern 51A und 51B horizontal gelagerten und nicht dargestellten Teigwaren werden zum Dosieren mittels linear beweglicher Trennplatten 54 jeweils in zwei Mengen geteilt, die eigentliche Portion und die weitere Vorratsmenge. Nach Herunterschwenken der Dosierplatten 52 rutschen die Teigwaren über Leitbleche 52' in eine im dargestellten und insoweit bevorzugten Ausführungsbeispiel einen U-förmigen Querschnitt aufweisende Übergabeschale 55. Zur Beschickung der Kochkammer l wird nun die Übergabeschale 55 um 90° hochgeschwenkt, wie strichpunktiert angedeutet ist, und die Teigwaren gelangen in die Kochkammer 1.

Dadurch wird erfindungsgemäß erreicht, daß die Portioniervorrichtung 50 unmittelbar oberhalb des Kochkammereinlasses 1E angeordnet sein kann. Auf diese Weise wird die gewünscht niedrige Bauhöhe abermals reduziert. Es versteht sich von selbst, daß auch eine Portioniervorrichtung mit einem einzigen Vorratsbehälter ausgestattet sein kann, neben dem die Schwenkbarkeit der Übergabeschale gewährleistet sein muß.

Aus Figur 6 geht deutlich hervor, daß die Behälter 51A und 51R nicht näher bezeichnete parallele Seitenwände aufweisen, welche mit wenigstens einem solchen Abstand zueinander derart angeordnet sind, daß ein Freiraum F entsteht, welcher in seinen Abmessungen der Breite der Übergabeschale 55 entspricht, um deren Verschwenkbarkeit zu ermöglichen.

Schließlich geht aus Figur 7 hervor, daß in weiterer Ausgestaltung der Erfindung jede Trennplatte 54 eine ballige Form aufweist und daß die balligen Kanten der in die Vorratsbehälter 51A und 51B eingeschobenen Trennplatten 54 oberhalb von Vorsprüngen 56 ruhen, ohne die parallelen Behälterwandungen zu berühren. Versuche haben ergeben, daß dies eine äußerst wirksame, und vielleicht sogar die einzige Möglichkeit ist, insbesondere die Portionierung von Spaghetti oder Makkaroni vorzunehmen, ohne daß einzelne Teigwaren beschädigt werden.

Dabei ist die Balligkeit in Fig. 7 stark überhöht dargestellt, zur ordnungsgemäßen Funktion reichen einige Millimeter "Versatz" aus. Dies ist besonders deshalb wichtig, weil die Teigwaren im unteren Bereich der Vorratsbehälter durch die von der Kochkammer 1 aufsteigende Wärme eine weichere Konsistenz erhalten. Ein Einquetschen oder gar Abscheren von Teigwaren, insbesondere Spaghetti, zwischen Behälterwand und Trennplatte 54 ist nicht möglich.

Besonders zweckmäßig ist es, wenn zwischen den in den Vorratsbehältern 51A und 51B eingeschobenen Trennplatten 54 und den darunter angeordneten Vorsprüngen 56 ein Spalt S vorhanden ist, der in etwa dem Durchmesser der verwendeten Teigwaren entspricht. Auf diese Weise können auch dort befindliche rohe Teigwaren nicht von einer Trennplatte 54 in Mitleidenschaft gezogen werden.

## Patentansprüche

1. Vorrichtung zum diskontinuierlichen Zubereiten von portionierten Teigwaren, insbesondere Spaghetti, mit einem Vorratsbehälter (51A, 51B) zur Aufnahme der Rohteigwaren, einer Kochkammer (1) und einer Entwässerungskammer (2), wobei die Kochkammer (1) und die Entwässerungskammer (2) jeweils in ihrem Einlaßbereich (1E, 1A) und Auslaßbereich (1A, 2A) durch Ventile (3, 17, 4) verschließbar sind, wobei als Ventil im Auslaßbereich (2A) der Entwässerungskammer (2) eine quer zur Einlaß- bzw. Auslaßrichtung linear verfahrbare Schließklappe (4) vorgesehen ist und wobei im Auslaßbereich (1A) der Kochkammer (1) und im Einlaßbereich der Entwässerungskammer (2) ein einziges Ventil (17) vorgesehen ist,
dadurch gekennzeichnet,
daß die Ventile (3, 4) im Einlaßbereich (1E) der Kochkammer (1) und im Auslaßbereich (2A) der Entwässerungskammer (2) als Schließklappen mit Abstand zur jeweiligen, die Öffnung der Kammer (1, 2) enthaltenden Kammerwand linear bewegbar sind,
daß die Schließklappen (3, 4) zum Verschließen am Ende der Linearbewegung mittels eines Hebelgetriebes (36, 37A, 37B) senkrecht auf die Öffnungsebene der jeweiligen Kammer (1, 2) gepreßt werden,
und daß das Ventil (17) zwischen dem Auslaßbereich der Kochkammer (1) und dem Einlaßbereich der Entwässerungskammer (2) als schwenkbare Schließklappe (17) ausgebildet ist, die mittels eines Linearantriebes und eines Kniehebelgetriebes (42, 43) verschlossen und verriegelt wird.

2. Vorrichtung nach Anspruch 1,
dadurch gekennzeichnet,
daß zur Bewegung der Schließklappen (3, 4) in beide Richtungen ein einziger Motor (31) vorgesehen ist.

3. Vorrichtung nach Anspruch 1 oder 2,
dadurch gekennzeichnet,
daß eine Rutschkupplung (34) vorgesehen ist, damit beim Verschließen nach Erreichen der Endstellung der Schließklappe (3, 4) die weitere Linearbewegung zur Betätigung des Hebelgetriebes (36, 37A, 37B) eingesetzt wird.

4. Vorrichtung nach einem der Ansprüche 1 bis 3,
dadurch gekennzeichnet,
daß als Linearantrieb für die schwenkbare Schließklappe (17) eine Kolben/Zylinder-Einheit (41) vorgesehen ist.

5. Vorrichtung nach einem der Ansprüche 1 bis 4,
dadurch gekennzeichnet,
daß das Kniehebelgetriebe (42, 43) für die schwenkbare Schließklappe (17) einen in einem Lager (L) innerhalb der Entwässerungskammer (2) schwenkbar befestigten Kniehebel (42) und eine an dem dem Lager (L) abgewandten Ende des Kniehebels (42) angeordnete Klemmrolle (43) aufweist, wobei die Klemmrolle (43) die drehbare Schließklappe (17) in ihre Verschlußposition bringt und der beim Kochvorgang entstehende und auf die drehbare Schließklappe (17) wirkende Druck durch das Lager (L) abgefangen wird.

6. Vorrichtung nach Anspruch 5,
dadurch gekennzeichnet,
daß die drehbare Schließklappe (17) einen Schließkeil (K) zum Zusammenwirken mit der Klemmrolle (43) aufweist.

7. Vorrichtung nach einem der Ansprüche 1 bis 6,
dadurch gekennzeichnet,
daß die drehbare Schließklappe (17) mit einer Schulter (46) ausgestattet ist, welche bei der Rückziehbewegung des Kolbens (41K) des Linearantriebes in Verbindung mit dem Kniehebelgetriebe (42, 43) dafür sorgt, daß die drehbare Schließklappe (17) zuverlässig zwangsgeöffnet wird.

8. Vorrichtung nach einem der Ansprüche 1 bis 7,
dadurch gekennzeichnet,
daß zu beiden Seiten des Kolbens (41K) des Linearantriebes Abdeckungen (47) derart angeordnet sind, daß der gesamte Kniehebel (42) mit seiner Klemmrolle (43) und einer Kulissenführung (44, 45) im Inneren der Abdeckungen (47) liegen und von der Unterseite der drehbaren Schließklappe (17) verdeckt sind.

9. Vorrichtung nach einem der Ansprüche 1 bis 8,
dadurch gekennzeichnet,
daß zur besseren Abdichtung alle Schließklappen (3, 4, 17) und/oder Öffnungsebenen der Kammern (1, 2) mit Dichtelementen versehen sind.

10. Vorrichtung nach Anspruch 9,
dadurch gekennzeichnet,
daß jeder Öffnungsbereich (1E, 1A, 2A) der Kammern (1, 2) von einem entsprechend der Öffnungskontur verlaufenden Dichtelement umgeben ist.

11. Vorrichtung nach Anspruch 10,
dadurch gekennzeichnet,
daß die Öffnungen in den Öffnungsbereichen (1E, 1A, 2A) einen runden Querschnitt aufweisen und daß als Dichtelemente O-Ringe (49) vorgesehen sind.

12. Vorrichtung nach einem der Ansprüche 1 bis 11,
dadurch gekennzeichnet,
daß die Teigwaren in wenigstens einem trichterförmigen Behälter (51A, 51B) horizontal gelagert sind,
daß am Boden jedes trichterförmigen Behälters (51A, 51B) eine höhenverstellbare Dosierplatte (52) angeordnet ist, daß zum Portionieren mit einer oberhalb jeder Dosierplatte (52) angeordneten Trennplatte eine gewünschte Menge vom Teigwarenvorrat abgesondert wird,
und daß im Bereich unterhalb jeder Dosierplatte (52) eine zur Beschickung der Kochkammer (1) um 90° schwenkbare Übergabeschale (55) angeordnet ist.

13. Vorrichtung nach Anspruch 12,
dadurch gekennzeichnet,
daß zwei Vorratsbehälter (51A, 51B) vorgesehen sind und zwei parallele Wände jedes Vorratsbehälters (51A, 51B) im Abstand voneinander derart angeordnet sind, daß ein Freiraum (F) zum Verschwenken der Übergabeschale (55) entsteht.

14. Vorrichtung nach Anspruch 12 oder 13,
dadurch gekennzeichnet,
daß jede Trennplatte (54) eine ballige Form aufweist und daß die ballige Kante der in jeden Vorratsbehälter (51A, 51B) eingeschobenen Trennplatte (54) oberhalb eines Vorsprunges (56) ruht, ohne die Behälterwandung zu berühren.

15. Vorrichtung nach Anspruch 14,
dadurch gekennzeichnet,
daß zwischen der in jeden Vorratsbehälter (51A, 51B) eingeschobenen Trennplatte (54) und dem Vorsprung (56) ein Spalt (S) vorhanden ist, der in etwa dem Durchmesser der verwendeten Teigwaren entspricht.

## Claims

1. Apparatus for the discontinuous preparation of portioned pasta products, in particular spaghetti, with a supply container (51A, 51B) to receive the raw pasta products, a cooking chamber (1) and a draining chamber (2), wherein the cooking chamber (1) and the draining chamber (2) can each be closed by valves (3, 17, 4) in their inlet region (1E, 1A) and outlet region (1A, 2A), the valve in the outlet region (2A) of the draining chamber (2) being constructed as a shut-off flap (4) that can be linearly displaced in a direction transverse to the inlet and outlet direction, respectively, and a single valve (17) being provided in the outlet region (1A) of the cooking chamber (1) and in the inlet region of the draining chamber (2),
characterized in that
the valves (3, 4) in the inlet region (1E) of the cooking chamber (1) and in the outlet region (2A) of the draining chamber (2) are shut-off flaps that can be moved linearly while spaced apart from the wall of the chamber (1, 2) containing the respective opening,
in that for closing the openings at the end of the linear movement, the shut-off flaps (3, 4) are pressed against the respective chamber (1, 2) in a direction perpendicular to the plane of the opening by means of a lever mechanism (36, 37A, 37B),
and in that the valve (17) between the outlet region of the cooking chamber (1) and the inlet region of the draining chamber (2) is constructed as a pivotable shut-off flap (17), which is closed and locked in place by means of a linear drive means and an articulated-lever mechanism (42, 43).

2. Apparatus according to claim 1,
characterized in that for moving the shut-off flaps (3, 4) in both directions a single motor (31) is provided.

3. Apparatus according to Claim 1 or 2,
characterized in that a sliding clutch (34) is provided so that when the shut-off flap (3, 4) has reached its end position during closure, the further linear movement serves to actuate the lever mechanism (36, 37A, 37B).

4. Apparatus according to any of claims 1 to 3,
characterized in that as the linear drive means for the pivotable shut-off flap (17) a piston/cylinder unit (41) is provided.

5. Apparatus according to any of the claims 1 to 4,
characterized in that the articulated-lever mechanism (42, 43) for the pivotable shut-off flap (17) comprises an articulated lever (42) pivotably mounted in a bearing (L) within the draining chamber (2) and a clamping roller (43) disposed at the end of the articulated lever (42) away from the bearing (L), such that the clamping roller (43) brings the rotatable shut-off flap (17) into its closed position and the pressure generated during the cooking process and acting on the rotatable shut-off flap (17) is absorbed by the bearing (L).

6. Apparatus according to Claim 5,
characterized in that the rotatable shut-off flap (17) comprises a closure wedge (K) to cooperate with the clamping roller (43).

7. Apparatus according to any of the claims 1 to 6,
characterized in that the rotatable shut-off flap (17) is equipped with a shoulder (46), which in combination with the articulated-lever mechanism (42, 43) ensures that during the withdrawal movement of the piston (41K) of the linear drive means, the rotatable shut-off flap (17) is reliably opened by force.

8. Apparatus according to any of the claims 1 to 7,
characterized in that on both sides of the piston (41K) of the linear drive means, covers (47) are arranged in such a way that the entire articulated lever (42) with its clamping roller (43) and a connecting link (44, 45) are located within the covers (47) and are shielded from the lower surface of the rotatable shut-off flap (17).

9. Apparatus according to any of the claims 1 to 8,
characterized in that for the purpose of better sealing, all shut-off flaps (3, 4, 17) and/or walls of the chambers (1, 2) in the plane of the openings are provided with sealing elements.

10. Apparatus according to Claim 9,
characterized in that each opening region (1E, 1A, 2A) of the chambers (1, 2) is surrounded by a sealing element configured to correspond to the contour of the opening.

11. Apparatus according to Claim 10,
characterized in that the openings in the opening regions (1E, 1A, 2A) are round in cross section and in that O-rings (49) are provided as sealing elements.

12. Apparatus according to any of the claims 1 to 11,
characterized in that
the pasta products are stored horizontally in at least one funnel-shaped container (51A, 51B),
in that at the floor of each funnel-shaped container (51A, 51B) there is disposed a dosing plate (52), the height of which can be varied,
in that for portioning purposes a desired amount is separated from the main supply of pasta products by means of a separation plate positioned above each dosing plate (52), and in that in the region below each dosing plate (52) a delivery vessel (55) that can be pivoted by 90° is disposed to transfer the pasta products to the cooking chamber (1).

13. Apparatus according to claim 12,
characterized in that two supply containers (51A, 51B) are provided and two parallel walls of the two supply containers (51A, 51B) are spaced apart from one another in such a way that a free space (F) is formed within which the delivery vessel (55) pivots.

14. Apparatus according to Claim 12 or 13,
characterized in that
each separation plate (54) has a rounded shape and in that the rounded edge of the separation plate (54), when inserted into the associated supply container (51A, 51B), rests above a projection (56) without touching the wall of the container.

15. Apparatus according to claim 14,
characterized in that between the separation plate (54) pushed into each supply container (51A, 51B) and the projection (56) a gap (S) is present, which corresponds approximately to the diameter of the pasta products being processed.

## Revendications

1. Dispositif pour préparer en discontinu des pâtes alimentaires en portions, en particulier des spaghettis, comprenant une cuve de stockage (51A,51B) pour recevoir des pâtes alimentaires brutes, une chambre de cuisson (1) et une chambre d'évacuation d'eau (2) dans lesquelles la chambre de cuisson (1) et la chambre d'évacuation d'eau (2) peuvent être fermées par des clapets (3,17,4) respectivement en leur zone d'entrée (1E,1A) et leur zone de sortie (1A,2A), dans lesquels un volet de fermeture (4) mobile linéairement, perpendiculairement à la direction d'entrée respectivement de sortie, est prévu en tant que clapet dans la zone de sortie (2A) de la chambre d'évacuation d'eau (2), et dans lesquels il est prévu un clapet unique (17) en la zone de sortie (1A) de la chambre de cuisson (1) et la zone d'entrée de la chambre d'évacuation d'eau (2), caractérisé en ce que
les clapets (3,4) en la zone d'introduction (1E) de la chambre de cuisson (1) et en la zone de sortie (2A) de la chambre d'évacuation d'eau (2) sont des volets de fermeture mobiles en translation avec un écartement par rapport à la paroi correspondante de la chambre comprenant l'ouverture de cette chambre (1,2),
en ce que les volets de fermeture (3,4) sont pressés perpendiculairement par rapport au plan de l'ouverture de chaque chambre (1,2) au moyen d'un entraînement à leviers (36,37A,37B) pour verrouillage à la fin de leur déplacement linéaire
et en ce que le clapet (17) entre la zone de sortie de la chambre de cuisson (1) et la zone d'entrée de la chambre d'évacuation d'eau (2) est formé par un volet de fermeture (17) pivotant qui est fermé et verrouillé au moyen d'un entraînement linéaire et d'un entraînement à genouillère par leviers (42,43).

2. Dispositif selon la revendication 1, caractérisé en ce qu'il n'est prévu qu'un moteur unique (31) pour déplacer les volets de fermeture (3,4) dans les deux directions.

3. Dispositif selon la revendication 1 ou 2, caractérisé en ce qu'il est prévu un accouplement débrayable par glissement (34) par lequel, lors de la fermeture et après que les volets de fermeture (3,4) aient atteint leur position finale, le déplacement linéaire ultérieur est mis en oeuvre pour actionner l'entraînement par leviers (36,37A,37B).

4. Dispositif selon l'une des revendications 1 à 3, caractérisé en ce qu'une unité à piston/cylindre (41) est prévue en tant qu'entraînement linéaire pour le volet de fermeture pivotant (17).

5. Dispositif selon l'une des revendications 1 à 4, caractérisé en ce que l'entraînement à genouillère par leviers (42,43) pour le volet de fermeture pivotant (17) présente un levier de genouillère (42) monté mobile en rotation sur un palier (L) à l'intérieur de la chambre d'évacuation d'eau (2) et une roulette de serrage (43) agencée en l'extrémité du levier de genouillère (42) opposé au palier (L), laquelle roulette de serrage (43) amène le volet de fermeture pivotant (17) en sa position de verrouillage, et en ce que la pression existante pendant l'étape de cuisson et agissant sur le volet de fermeture pivotant (17) est supportée par le palier (L).

6. Dispositif selon la revendication 5, caractérisé en ce que le volet de fermeture pivotant (17) présente un coin de fermeture (K) interagissant avec la roulette de serrage (43).

7. Dispositif selon l'une des revendications 1 à 6, caractérisé en ce que le volet de fermeture pivotant (17) est conçu avec un épaulement (46) qui, lors du retrait du piston (41K) de l'entraînement linéaire, vient en liaison avec l'entraînement à genouillère par leviers (42,43) de telle sorte que le volet de fermeture pivotant (17) soit contraint à l'ouverture de manière fiable.

8. Dispositif selon l'une des revendications 1 à 7, caractérisé en ce que des couvercles (47) sont agencés des deux côtés du piston (41K) de l'entraînement linéaire de telle sorte que l'ensemble du levier de genouillère (42) avec sa roulette de serrage (43) ainsi qu'une coulisse de guidage (44,45) se situent à l'intérieur de ces couvercles (47) et soient protégés de la face inférieure du volet de fermeture pivotant (17).

9. Dispositif selon l'une des revendications 1 à 8, caractérisé en ce que tous les volets de fermeture (3,4,17) et/ou plans d'ouverture des chambres (1,2) sont prévus avec des éléments d'étanchéité pour améliorer l'étanchéité.

10. Dispositif selon la revendication 9, caractérisé en ce que chaque zone d'ouverture (1E,1A,2A) des chambres (1,2) est entourée par un élément d'étanchéité se déployant en correspondance avec le contour de l'ouverture.

11. Dispositif selon la revendication 10, caractérisé en ce que les ouvertures présentent une section circulaire dans les zones d'ouverture (1E,1A,2A) et en ce qu'il est prévu des joints annulaires (49) en tant qu'éléments d'étanchéité.

12. Dispositif selon l'une des revendications 1 à 11, caractérisé en ce que les pâtes alimentaires sont stockées horizontalement dans au moins une cuve en forme d'entonnoir (51A,51B),
en ce qu'une plaque de dosage (52) réglable en hauteur est agencée au fond de chaque cuve en forme d'entonnoir (51A,51B), plaque qui, avec une plaque de séparation agencée au dessus de chaque plaque de dosage (52), va séparer une quantité désirée de pâtes alimentaires brutes pour établir une portion,
et en ce qu'une cuvette de transfert (55) pivotable à 90° est agencée dans la zone sous-jacente à chaque plaque de dosage (52) pour alimenter la chambre de cuisson (1).

13. Dispositif selon la revendication 12, caractérisé en ce qu'il est prévu deux cuves de stockage (51A,51B) et en ce que deux parois parallèles de chaque cuve de stockage (51A,51B) sont agencées avec un écartement l'une par rapport à l'autre de telle sorte à constituer un espace libre (F) pour le basculement de la cuvette de transfert (55).

14. Dispositif selon la revendication 12 ou 13, caractérisé en ce que chaque plaque de séparation (54) présente une forme bombée et en ce que la bordure bombée de la plaque de séparation (54) insérée dans chacune des cuves de stockage (51A,51B) vient se déplacer au-dessus d'une protubérance (56) sans toucher les parois de la cuve.

15. Dispositif selon la revendication 14, caractérisé en ce qu'il est prévu un espace (S) entre la plaque de séparation (54) insérée dans chaque cuve de stockage (51A,51B) et leur protubérance (56), espace correspondant sensiblement au diamètre des pâtes alimentaires utilisées.
